# EUROPEAN PATENT APPLICATION

(11) **EP 4 462 878 A1**
(43) Date of publication of application: **13.11.2024**
(21) Application number: 24175128.8
(22) Date of filing: 10.05.2024
(51) Int. Cl.: H04W 36/36

(54) **SUBSEQUENT EXECUTION CONDITION GENERATION FOR CONDITIONAL HANDOVER IN DUAL CONNECTIVITY**

(30) Priority: 11.05.2023 US 202363465543 P
(71) Applicant: Industrial Technology Research Institute, 310401 Hsinchu (TW)
(72) Inventor: Huang, Nai-Lun, 302 Zhubei City, Hsinchu County (TW)
(74) Representative: Kurig, Thomas

(57) **Abstract**

An execution condition generation method including: generating, by a candidate node(612, 613, 812, 813) or serving node(611, 811), at least one execution condition used in a subsequent conditional execution, wherein the subsequent conditional execution is performed after a cell change or a cell addition, wherein the subsequent conditional execution is performed when at least one of the at least one execution condition is met

## Description

### BACKGROUND

### Technical Field

The present disclosure relates to field of telecommunications and execution condition generation for subsequent conditional execution.

### Description of Related Art

In the field of telecommunications, a user equipment (UE) may adopt a dual connectivity (DC) architecture which may allow the UE to be simultaneously connected to two nodes and use radio resources provided by the same or different radio access technologies (RATs), such as long term evolution (LTE) or new radio (NR). Specifically, the UE may be connected to a base station serving as a master node (MN) and a base station serving as a secondary node (SN). In the DC architecture, the UE may be connected to a master cell group (MCG) corresponding to the MN and a secondary cell group (SCG) corresponding to the SN. The MCG and the SCG may respectively include multiple service cells aggregating based on the carrier aggregation (CA) technology. The MCG may include a primary cell (PCell) and a secondary cell (SCell). The SCG may include a PSCell (Primary SCG Cell or Primary Secondary Cell) and at least one SCell (Secondary Cell).

### SUMMARY

Exemplary embodiments of the disclosure provide an execution condition generation method and a candidate node, a serving node and a user equipment (UE) of a network system using the same.

In one or more embodiments of the present disclosure, an execution condition generation method, adapted for a candidate node is provided. The method includes: generating, by the candidate node, at least one execution condition used in a subsequent conditional execution, wherein the subsequent conditional execution is performed after a cell change or a cell addition, wherein the subsequent conditional execution is performed when at least one of the at least one execution condition is met.

In one or more embodiments of the present disclosure, an execution condition generation method, adapted for a serving node is provided. The method includes: generating, by the serving node, at least one execution condition used in a subsequent conditional execution, wherein the subsequent conditional execution is performed after a cell change or a cell addition, wherein the subsequent conditional execution is performed when at least one of the at least one execution condition is met.

In one or more embodiments of the present disclosure, an execution condition generation method, adapted for a user equipment (UE) is provided. The method includes: receiving, by the UE, at least one execution condition used in a subsequent conditional execution from a candidate node or a serving node, wherein the subsequent conditional execution is performed after a cell change or a cell addition; determining whether one of the at least one execution condition is met; and in response to determining that the one of the at least one execution condition is met, performing the subsequent conditional execution.

In summary, the execution condition generation methods, adapted for candidate node, serving node and UE provided by the present disclosure are capable of: generating execution conditions for prepared candidate cells for subsequent conditional execution, so as to directly perform the subsequent conditional execution when one execution condition is met without negotiating to prepare candidate cells again.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram that illustrates a communication system, according to an exemplary embodiment of the present disclosure.
FIG. 2 is a block diagram that illustrates a communication device, according to an exemplary embodiment of the present disclosure.
FIG. 3 is a schematic diagram that illustrates a Dual Connectivity communication system.
FIG. 4 is a sequence diagram that illustrates a PSCell change procedure.
FIG. 5 is a sequence diagram that illustrates a Conditional PSCell Change (CPC) procedure.
FIG. 6 is a sequence diagram that illustrates a Subsequent CPC execution in case an initial Conditional PSCell Addition (CPA) is configured, according to an exemplary embodiment of the present disclosure.
FIG. 7 is a sequence diagram that illustrates a Subsequent CPC execution in case an initial CPC is configured, according to an exemplary embodiment of the present disclosure.
FIG. 8 is a sequence diagram that illustrates a candidate SN generates execution conditions for subsequent CPC, according to an exemplary embodiment of the present disclosure.
FIG. 9 is a further sequence diagram that illustrates a candidate SN generates execution conditions for subsequent CPC, according to an exemplary embodiment of the present disclosure.
FIG. 10 is a sequence diagram that illustrates candidate SNs respectively generate execution conditions for subsequent CPC, according to an exemplary embodiment of the present disclosure.
FIG. 11 is a sequence diagram that illustrates a MN generates execution conditions for subsequent CPC, according to an exemplary embodiment of the present disclosure.
FIG. 12 is a further sequence diagram that illustrates a MN generates execution conditions for subsequent CPC, according to an exemplary embodiment of the present disclosure.

### DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

The abbreviations in the present disclosure are defined as follows and unless otherwise specified, the acronyms have the following meanings:

| | |
|---|---|
| Abbreviation | Full name |
| 3GPP: | 3^{rd} Generation partnership project |
| CE: | Control Element |
| CHO: | Conditional Handover |
| CPA: | Conditional PSCell Addition |
| CPAC: | Conditional PSCell Addition/Change |
| CPC: | Conditional PSCell Change |
| DC: | Dual Connectivity |
| DCI: | Downlink Control Information |
| DL: | Downlink |
| GW: | Gateway |
| HO: | handover |
| MAC: | Media Access Control |
| MN: | Master Node |
| NR: | New Radio |
| PSCell: | Primary Secondary Cell or Primary SCG Cell |
| RAN2: | Radio Access Network working group 2 |
| RRC: | Radio Resource Control |
| SCG: | Secondary Cell Group |
| SN: | Secondary Node |
| Tx: | Transmission |
| UE: | user equipment |
| UL: | Uplink |

"Configured" in this disclosure may be default/predefined/fixed/configured/activated/indicated/set, ..., but not limited herein.

RRC in this disclosure may be replaced by MAC CE, DCI, ..., but not limited herein.

Communication device in this disclosure may be represented by UE, or gNodeB, but not limited herein.

Network device in this disclosure may be represented by gNodeB(gNB), NG-RAN or base station, but not limited herein.

Combinations of embodiments disclosed in this disclosure is not precluded.

All steps in the embodiments may not be performed in a step-by-step way. The orders of the steps in the embodiments are examples and not limited herein. Some of the steps in the embodiments may be omitted.

A PSCell addition may be the process of DC establishment in which an SCG including a PSCell is added. A Conditional PSCell Addition (CPA) may be a PSCell addition based on certain execution conditions. The CPA configuration may include at least one candidate target PSCell and at least one execution condition.

A PSCell change may be the process of changing the serving PSCell. A Conditional PSCell Change (CPC) may be a PSCell change based on certain execution conditions. The CPC configuration may include at least one candidate target PSCell and at least one execution condition.

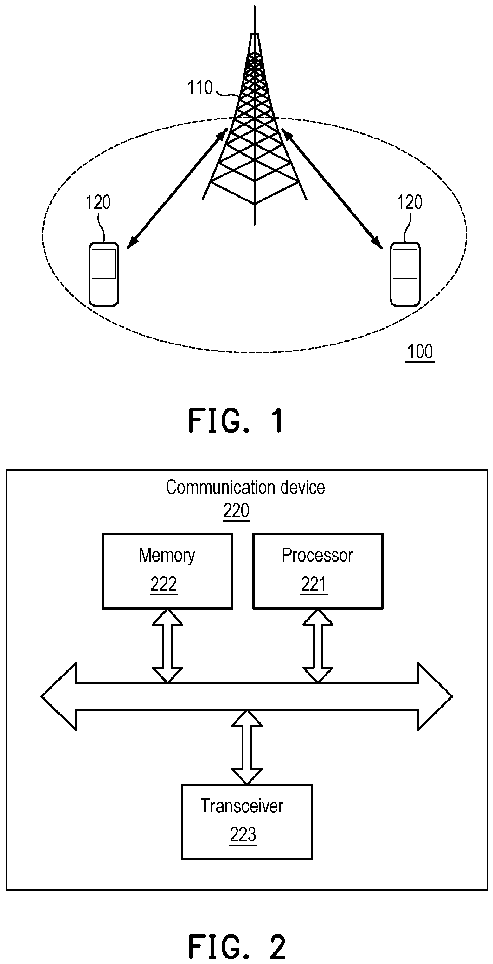

FIG. 1 is a schematic diagram that illustrates a communication system according to an exemplary embodiment of the present disclosure. Referring to FIG. 1, a communication system 100 (e.g., a Long Term Evolution (LTE) system, an LTE-Advanced (LTE-A) system, an LTE-Advanced Pro system, or a 5G NR Radio Access Network (RAN)) typically includes one or more network devices 110 and one or more UEs 120. The UE 120 communicates with the network (e.g., a Core Network (CN), an Evolved Packet Core (EPC) network, an Evolved Universal Terrestrial Radio Access network (E-UTRAN), a 5G Core (5GC), or an internet), through a RAN established by one or more network devices 110.

It should be noted that, in the present disclosure, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A network device (or called base station, an NW device, or NW) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device may include, but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) BS in connection with the 5GC, a next-generation Node B (gNB) as in the 5G Access Network (5G-AN), and any other apparatus capable of controlling radio communication and managing radio resources within a cell. The network device may connect to serve the one or more UEs through a radio interface to the network.

The network device may be operable to provide radio coverage to a specific geographical area using a plurality of cells included in the RAN. The network device may support the operations of the cells. Each cell may be operable to provide services to at least one UE within its radio coverage. Specifically, each cell (often referred to as a serving cell) may provide services to serve one or more UEs within its radio coverage (e.g., each cell schedules the Downlink (DL) and optionally Uplink (UL) resources to at least one UE within its radio coverage for DL and optionally UL packet transmission). The network device may communicate with one or more UEs in the radio communication system through the plurality of cells.

As discussed above, the frame structure for NR is to support flexible configurations for accommodating various generation(s) (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

It should be understood that the terms "system" and "network" used in the disclosure are often used interchangeably. The term "and/or" in the disclosure is an association relationship describing the associated objects, which means that there can be kinds of relationships, for example, A and/or B, which can mean four situations: A, B, A and B, or A or B. In addition, the character "/" in the disclosure generally indicates that the associated objects are in an "or" relationship.

FIG. 2 is a block diagram that illustrates a communication device according to an exemplary embodiment of the present disclosure. Referring to FIG. 2, the communication device 220 may be a UE, a gNodeB, or a network device. The communication device 220 may include, but is not limited thereto a processor 221. The processor 221 (e.g., having processing circuitry) may include an intelligent hardware device, e.g., a Central Processing Unit (CPU), a microcontroller, an ASIC (Application Specific Integrated Circuit), and etc. The processor 221 can call and run a program (e.g., a computer program, an application, etc.) from a memory to implement the method in the embodiment of the disclosure.

The program code stored in the communication device 220 may adopt all the technical solutions of all the foregoing embodiments when being executed by the processor 221, it at least has all the advantageous effects brought by all the technical solutions of all the foregoing embodiments, and no further description is incorporated herein.

Optionally, as shown in FIG. 2, the communication device 220 may further include a memory 222. The memory 222 may include computer-storage media in the form of volatile and/or non-volatile memory. The memory 220 may be removable, non-removable, or a combination thereof. Exemplary memory includes solid-state memory, hard drives, optical-disc drives, and etc. The processor 221 may call and run a computer program from the memory 222 to implement the method in the embodiment of the disclosure.

The memory 222 may be a separate device independent of the processor 221, or may be integrated in the processor 221.

Optionally, as shown in FIG. 2, the communication device 220 may further include a transceiver 223, and the processor 221 may control the transceiver 223 to communicate with other devices. The transceiver 220 having a transmitter (e.g., transmitting/transmission circuitry) and/or a receiver (e.g., receiving/reception circuitry) may be configured to transmit and/or receive time and/or frequency resource partitioning information. In some implementations, the transceiver 223 may be configured to transmit in different types of subframes and/or slots including, but not limited to, usable, non-usable and flexibly usable subframes and/or slot formats. The transceiver 223 may be configured to receive data and control channels.

The transceiver 223 may send information or data to other devices, or receive information or data sent by other devices.

The transceiver 223 may include a transmitter and a receiver. The transceiver 3530 may further include an antenna, and the number of antennas may be one or more.

Optionally, the communication device 220 may specifically be a network device in an embodiment of the disclosure, and the communication device 220 may implement the corresponding process implemented by the network device in various methods of the embodiment of the disclosure. For the conciseness, related descriptions are omitted.

Optionally, the communication device 220 may specifically be a mobile terminal, a terminal device, or a UE in an embodiment of the disclosure, and the communication device 220 may implement the corresponding process implemented by the mobile terminal, the terminal device, or the UE in various methods in the embodiment of the disclosure. For conciseness, related description is omitted.

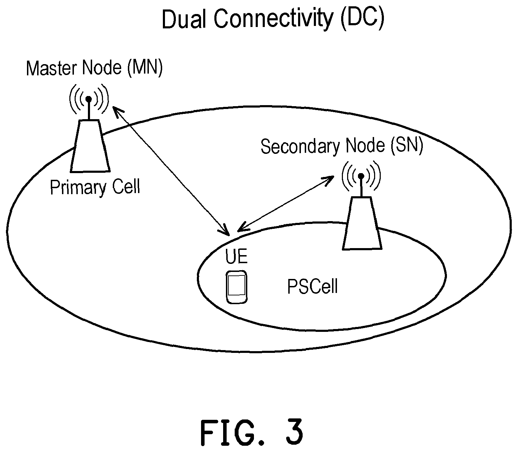

FIG. 3 is a schematic diagram that illustrates a Dual Connectivity communication system (also referred to as DC network). Referring to FIG. 3, a Dual Connectivity (DC) communication system with a master node (MN) and a secondary node (SN), wherein the master node contains a primary cell and the secondary node contains a PSCell (a primary secondary cell or a primary Secondary Cell Group (SCG) cell). The user equipment (UE) communicates with both the MN and the SN.

In one embodiment, a master node (MN) manages the most communication process. It manages the allocation of radio resources, performs scheduling, and controls handovers between cells. It communicates with both the UE and the secondary node.

In one embodiment, a primary cell (PCell) is the main cell serving the UE. It handles the majority of the UE's traffic. The UE and the primary cell exchange control signaling and user data.

In one embodiment, a PSCell supplements the primary cell by providing additional capacity or improved coverage for the UE. The UE and the PSCell exchange user data.

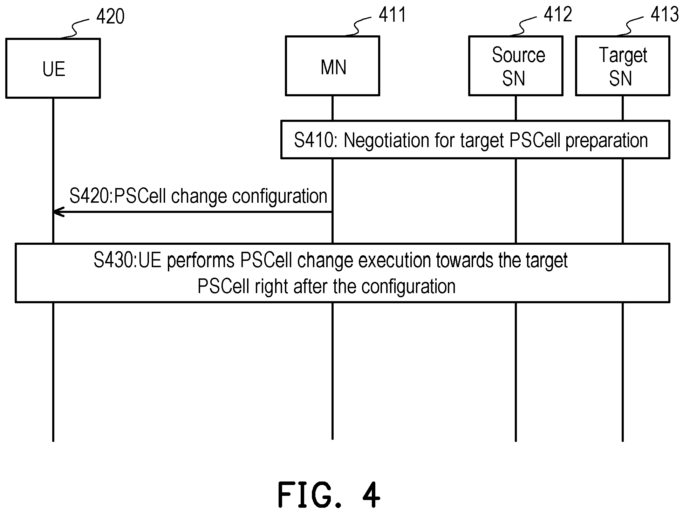

FIG. 4 is a sequence diagram that illustrates a PSCell change procedure. A master node 411, a source SN (having source PSCell) 412, a target SN (having target cell) 413 and a UE 420 are involved. The target SN 413 may be suggested by the MN 411 or Source SN 412.

In step S410, the MN 411, source SN 412 and target SN 413 negotiate for associated configuration of the target cell of the target SN 413, and after step S410, the MN 411 may transmit a corresponding PSCell change configuration to UE 420 (step S420). Next, in step S430, the UE 420 may performs PSCell change execution towards the target Cell (which become the new PSCell) according to the PSCell change configuration.

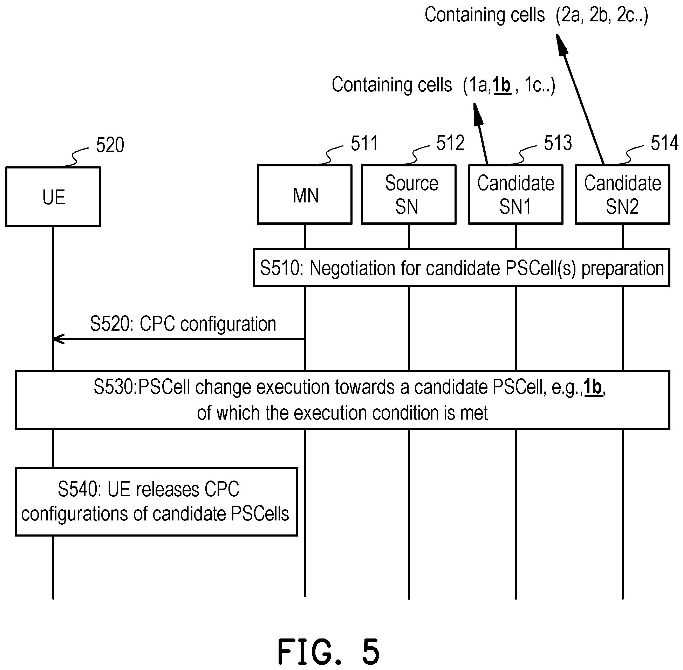

FIG. 5 is a sequence diagram that illustrates a Conditional PSCell Change (CPC) configuration procedure.

In 3GPP Rel-16/17 specifications, conditional configurations are further introduced. For example, in a conditional PSCell change (CPC) configuration procedure, network prepares multiple candidate PSCells with associated execution conditions in advance. A UE configured with the CPC configuration performs CPC execution towards a candidate PSCell when its associated execution condition is met.

Referring to FIG. 5, in one embodiment, a SN-initiated Conditional PSCell Change (CPC) procedure involves at least following entities: a MN 511, a source SN (having source PSCell) 512, a candidate SN1 513, a candidate SN2 514, and a UE 520. Candidate SN1 513 contains a plurality of candidate cells (e.g., 1a, 1b and 1c...); Candidate SN2 514 contains a plurality of candidate cells (e.g., 2a, 2b and 2c...). One of the candidate cells may become a new serving PSCell. In another embodiment, a MN-initiated Conditional PSCell Change (CPC) procedure involves at least following entities: a MN 511, a candidate SN1 513, a candidate SN2 514, and a UE 520.

In step S510, negotiation for candidate PSCell(s) preparation. The MN 511, the source SN 512, the candidate SN1 513 and the candidate SN2 514 negotiate possibility and corresponding execution condition of the candidate cell among cells in the candidate SN1 513 and the candidate SN2 514 for the CPC procedure.

Next, in step S520, after obtaining the execution conditions and related configurations of the candidate PSCells (accepted by their candidate nodes), the MN 511 transmit CPC configurations to the UE 520. The CPC configurations may include: identities of the candidate PSCells (1a, 1b, etc.), associated execution conditions (e.g., signal strength thresholds and corresponding determination rules) of the candidate PSCells for triggering a CPC procedure to each candidate PSCell, and parameters related to the radio link with each candidate PSCell.

Next, in step S530, when one execution condition corresponding to one candidate PSCell (e.g., 1b) according to the CPC configuration is met, the UE 520 performs the PSCell change execution toward the cell 1b, such that the candidate cell will be the new PSCell (or called as serving PSCell).

Next, in step S540, the UE 520 release CPC configurations of candidate PSCells after a successful handover to a target PSCell 1b.

In some methods, after finishing a PSCell change execution, the UE 520 releases CPC configurations of candidate PSCells. However, if a subsequent CPC execution is needed, negotiation for candidate PSCell(s) preparation is needed again (e.g., to start over from step S510). This will cause signaling overhead and cost additional resources and time.

A new mechanism was introduced to support Subsequent Conditional PSCell Change following a PSCell addition or change, for example, in 3GPP Release 18 (Rel-18). This eliminates the need to repeat the negotiation for Conditional PSCell Addition (CPA) or CPC candidate cell(s) preparation after the initial operation. The baseline procedure for Subsequent CPC works as follows:
(1) Initial execution: When a condition for CPA or CPC is met for a candidate PSCell, the UE performs the CPA or CPC execution to that cell.
(2) Configuration Retention: After completing the initial PSCell addition or change, the UE retains the CPA or CPC configurations for the candidate PSCells. This allows for performing subsequent CPC without renegotiating again.
(3) Subsequent CPC: If a condition for subsequent CPC is met for a candidate PSCell, the UE can directly perform a subsequent CPC execution to that cell using the corresponding candidate PSCell configuration already received and stored.

Subsequent CPC may be due to different purpose from initial CPA/CPC, so the execution conditions may be different. Moreover, after a PSCell addition or change is executed, serving PSCell/SN is added or changed. If the new serving PSCell/SN is considered for setting the execution conditions regarding the subsequent CPC, subsequent CPC may focus on improving the connection based on the UE's current situation and may avoid unnecessary consideration of the previous serving cell/node.

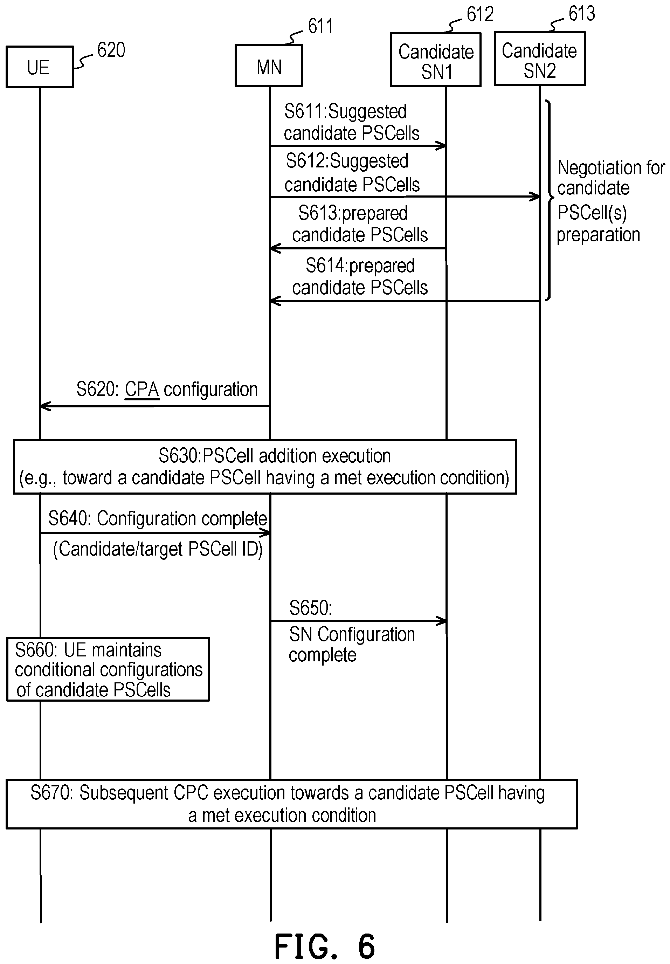

FIG. 6 is a sequence diagram that illustrates a Subsequent CPC execution in a case that an initial Conditional PSCell Addition (CPA) is configured, according to an exemplary embodiment of the present disclosure. Referring to FIG. 6, the initial CPA involves at least following entities: a MN 611, a candidate SN1 612, a candidate SN2 613 and a UE 620.

In this embodiment, the MN 611 would like to add a PSCell for the UE 620 by selecting one from cells in the candidate SN1 612 and the candidate SN2 613.

Firstly, the MN 611, the candidate SN1 612 and the candidate SN2 613 perform negotiation for target PSCell preparation, including steps S611-S614.

In step S611, the MN 611 transmits suggested candidate PSCells (e.g., a list/message recording information related to the suggested candidate PSCells is transmitted) in the candidate SN1 612 to the candidate SN1 612. In step S612, the MN 611 transmits suggested candidate PSCells in the candidate SN2 613 to the candidate SN2 613.

In an embodiment, the candidate SNs 612 and 613 might be identified based on various factors like neighboring cell information or measurements. In the negotiation, these nodes might involve exchanging information like: UE's current radio resource information, candidate cells' load and capability, or potential conditions for handover to each candidate cell (e.g., signal strength thresholds).

Next, in step S613, the candidate SN1 612 responses the MN 611 the accepted candidate cell(s) as the prepared candidate PSCell(s) (e.g., a list/message recording information related to the prepared candidate PSCells is transmitted) based on the received suggested candidate PSCells; in step S614, the candidate SN2 613 responses the MN 611 the accepted candidate cell(s) as the prepared candidate PSCell(s) based on the received suggested candidate PSCells. In an embodiment, when one of the suggested candidate PSCell is not accepted by the candidate SN, the said one suggested candidate PSCell is not one of the at least one prepared candidate PSCell of the candidate SN and the transmitted list of the prepared candidate PSCell(s) will not include the said one suggested candidate PSCell.

In an embodiment, each candidate SN may evaluate the suggested candidate PSCells based on criteria such as signal quality, load, and performance, etc., and decides which suggested candidate PSCell can be accepted as a prepared candidate PSCell for the CPA procedure. Each candidate SN then prepares, for each its accepted candidate PSCell, configuration and transmits a respond to the MN 611 about the at least one prepared candidate PSCell and associated configuration (e.g. PSCell configuration).

Next, in step S620, the MN 611 generates execution condition used for an initial CPA execution for the at least one prepared candidate PSCell and transmits a CPA configuration which includes the information related to the prepared candidate PSCells for CPA execution to the UE 620.

In an embodiment, the CPA configuration might include: identity of each of the prepared candidate PSCells, associated execution conditions for triggering the PSCell addition execution, and parameters related to the radio link with each of the prepared candidate PSCells.

Next, in step S630, when a pre-defined execution condition for a candidate PSCell is met, the UE 620 identifies this candidate PSCell as a target PSCell and executes the PSCell addition procedure with the target PSCell.

After completing the PSCell addition procedure successfully, in step S640, the UE 620 transmits, to the MN 611, a message indicating the configuration toward to the target PSCell is completed, wherein the message may include at least ID of the target PSCell.

Next, in step S650, after receiving the configuration complete message from the UE 620, the MN 611 transmits a message (e.g., SN configuration complete) to the SN of the target PSCell for indicating that the PSCell addition procedure and related SN configuration toward the target PSCell has been completed. The MN 611 confirms the completion of SN configuration, ensuring all settings are applied and operational.

In an embodiment, after the candidate SN1 612 receives the "SN configuration complete" message from the MN 611 at step S650, it typically means that the configuration process for the Secondary Node has been finalized. However, the candidate SN1 612 may perform the following operations, for example, Verification: The candidate SN1 612 may verify the configuration parameters to ensure they are correctly applied; Acknowledgment: It may send an acknowledgment back to the MN 611 confirming the successful application of the configuration; Preparation for Service: The candidate SN1 612 prepares to provide service to the UE 620, which could involve calibrating its resources and adjusting its operational state; Monitoring: It may start monitoring the performance and quality of the connection to maintain service levels.

Next, in step S660, the UE 620 maintains conditional configurations of the candidate PSCells. The UE 620 stores the configurations for the prepared candidate cells received in S620. This allows the UE 620 to monitor the execution conditions for each candidate PSCell and perform a subsequent CPC to the best candidate when its execution condition is met, without needing further instructions from the MN. In an embodiment, the UE maintains a list including at least: ID of remaining candidate PSCells and corresponding pre-defined execution conditions (e.g., conditional configurations) for the remaining candidate PSCells, which could be used for performing the following subsequent CPC while one of the pre-defined execution conditions is met.

Next, in step S670, the UE 620 perform the Subsequent CPC execution towards a candidate PSCell having a met execution condition. The UE continuously monitors the execution conditions for each candidate PSCell. Once a further execution condition is met for a particular candidate PSCell, the UE 620 triggers another CPC procedure to that particular candidate PSCell using the configuration parameters (stored in step S660) related to that particular candidate PSCell.

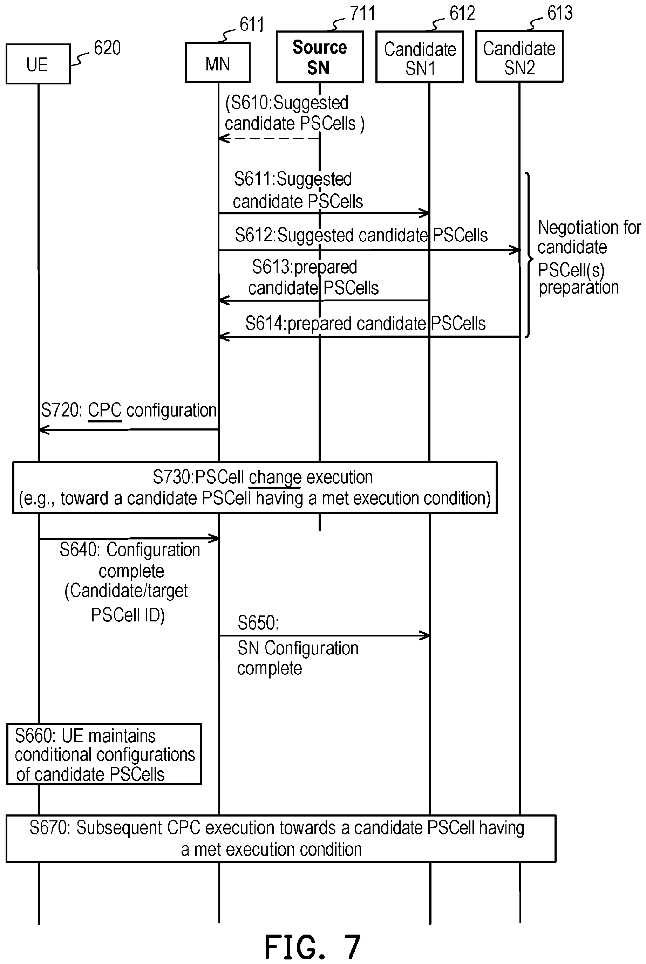

FIG. 7 is a sequence diagram that illustrates a Subsequent CPC execution in case an initial CPC is configured, according to an exemplary embodiment of the present disclosure. Referring to FIG. 7, it depicts an initial CPC procedure, including steps S611-S614, S720-S730, and S640-S670. Assuming that initial CPC procedure involves at least following entities: a MN 611, a candidate SN1 612, a candidate SN2 613, a UE 620 and a source SN 711, wherein the source SN 711 contains a serving PSCell (also called as source PSCell) to the UE 620. Where, the steps of S611-S614, S640-S670 are described above for FIG. 6 and the details are omitted hereto.

In an embodiment, when the MN 611 initials a CPC procedure, the MN 611, the candidate SN1 612 and the candidate SN2 613 perform negotiation for candidate PSCell preparation.

After receiving the prepared candidate PSCells (e.g., a list/message recording information related to the suggested candidate PSCells is received) from the candidate SN1 612 and the candidate SN2 613, in step S720, the MN 611 generates a CPC configuration which includes the information related to the prepared candidate PSCells for CPC execution, and the MN 611 transmits the CPC configuration to the UE 620.

In an embodiment, the CPC configuration might include: identity of each of the prepared candidate PSCells, associated execution conditions for triggering the PSCell change execution, and parameters related to the radio link with each of the prepared candidate PSCells.

Next, in step S730, when a pre-defined execution condition for a candidate PSCell is met, the UE 620 identifies this candidate PSCell as a target PSCell and executes the PSCell change procedure with the target PSCell, so as to change the serving PSCell from the old serving PSCell of the source SN 711 to the target PSCell of the candidate SN1 612.

After completing the PSCell change procedure successfully, in step S640, the UE 620 transmits, to the MN 611, a message indicating that the configuration towards the target PSCell is completed, wherein the message may include at least ID of the target PSCell.

It should be noted that the CPC procedure may be initialed by the source SN 711. In step S610, the source SN 711 may transmit the suggested candidate PSCells of the candidate SN1 612 and the candidate SN2 613 to the MN 611.

In an embodiment, the source SN 711 will initiate the CPC procedure by transmitting suggested candidate PSCell to the MN 611 under certain conditions. These conditions typically involve scenarios where the current PSCell may not be optimal for the UE 620 due to various reasons such as signal degradation, load balancing, or better service availability on another cell. Here are some specific conditions that might trigger the source SN 711 to initiate the CPC procedure:
(1)Quality of Service: If the quality of service (QoS) on the current PSCell degrades below a certain threshold, the source SN 711 may look for alternative PSCells that can provide better QoS.
(2)Load Balancing: To balance the load across the network, the source SN 711 may suggest a candidate PSCell that has more resources available.
(3)Signal Strength: A significant change in signal strength, such as a drop due to UE 620 movement, might prompt the source SN to suggest a change to a PSCell with a stronger signal.
(4)Network Policies: Network policies or configurations may dictate conditions under which PSCells should be changed to optimize network performance.
(5)UE Requirements: Changes in the UE's requirements, such as the need for higher data rates or lower latency, can also lead to the initiation of the CPC procedure.

The source SN 711 would typically monitor these conditions and, upon detecting that a change is warranted, would communicate with the MN 620 to suggest a candidate PSCell for the UE. In one embodiment, the MN 611 may consider conditions similar to the above for determining whether a CPC procedure should be initialed.

### [Embodiment A.1]

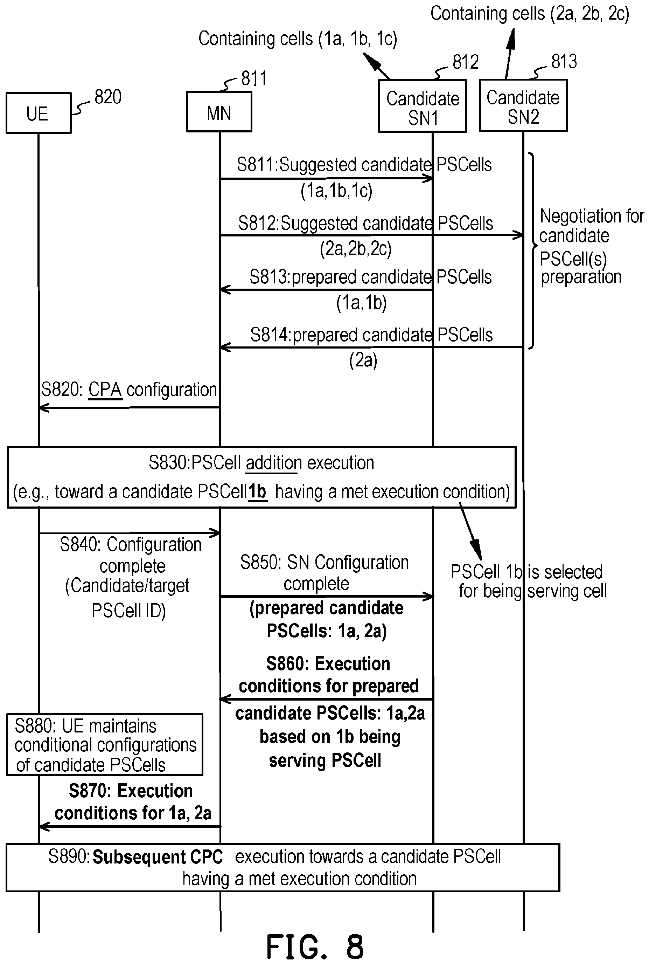

In the embodiment, candidate SN generates at least one execution condition for the at least one prepared candidate PSCell for performing the subsequent CPC. In detail, after a cell change or a cell addition, the serving node (e.g., MN811 in FIG. 8) provides the at least one prepared candidate cell to candidate node (e.g., candidate SN1); the candidate node generates at least one execution condition used in a subsequent conditional execution; the at least one execution condition is transmitted to the serving node; and the serving node transmits the at least one execution condition to the UE, wherein the subsequent conditional execution is performed after the cell change or the cell addition, wherein the subsequent conditional execution is performed when one of the at least one execution condition is met.

FIG. 8 is a sequence diagram that illustrates a candidate SN generates execution conditions for subsequent CPC, according to an exemplary embodiment of the present disclosure.

Referring to FIG. 8, the initial CPA procedure and subsequent CPC execution involve at least following entities: a MN 811(also referred to as a serving node, or a serving MN), a candidate SN1 812, a candidate SN2 813 and a UE 820, wherein the candidate SN1 812 contains candidate PSCells 1a, 1b and 1c; the candidate SN2 813 contains candidate PSCells 2a, 2b and 2c.

In this embodiment, the MN 811 would like to add a PSCell for the UE 820 by selecting one from candidate cells in the candidate SN1 812 and the candidate SN2 813.

Firstly, the MN 811, the candidate SN1 812 and the candidate SN2 813 perform negotiation for target PSCell preparation, may include steps 5811-5814.

In step S811, the MN 811 transmits suggested candidate PSCells in the candidate SN1 812 to the candidate SN1 812 (e.g., by transmitting a list/message recording information related to the suggested candidate PSCells 1a, 1b and 1c). In step S812, the MN 811 transmits suggested candidate PSCells in the candidate SN2 813 to the candidate SN2 813 (e.g., by transmitting a list/message recording information related to the suggested candidate PSCells 2a, 2b and 2c).

Next, in step S813, the candidate SN1 812 responses the MN 811 the accepted candidate cells (e.g., candidate PSCells 1a, 1b) as the prepared candidate PSCells based on the received suggested candidate PSCells 1a, 1b and 1c; in step S814, the candidate SN2 813 responses the MN 811 the accepted candidate cell (e.g., candidate PSCells 2a) as the prepared candidate PSCell based on the received suggested candidate PSCells 2a, 2b and 2c.

Next, in step S820, the MN 811 generates a CPA configuration which includes the information related to the prepared candidate PSCells (e.g., 1a, 1b and 2a) for CPA execution, and the MN 811 transmits the CPA configuration to the UE 820.

Next, in step S830, when a pre-defined execution condition for a candidate PSCell (e.g., 1b) is met, the UE 820 identifies this candidate PSCell 1b as a target PSCell (also referred to as aa selected candidate cell) and executes the PSCell addition procedure with the target PSCell 1b. The PSCell 1b (also referred to as the selected PSCell) is selected for being the serving PSCell for the CPA procedure.

After completing the PSCell addition procedure successfully, in step S840, the UE 820 transmits, to the MN 811, a Configuration complete message indicating that the configuration towards the target PSCell is completed, wherein the message may include at least ID of the target PSCell.

In an embodiment, after receiving, by a serving node (e.g., MN 811), a configuration complete message from the UE 820, transmitting, by the serving node, at least one prepared candidate cell to a node (e.g., candidate SN1 812) of the selected candidate cell (e.g., 1b).

In an embodiment, in step S850, after receiving the configuration complete message from the UE 820, the MN 811 transmits a message (e.g., SN configuration complete) to the SN of the target PSCell for indicating that the PSCell addition procedure and related SN configuration toward the target PSCell has been completed. The MN 811 confirms the completion of SN configuration, ensuring all settings are applied and operational. In the embodiment, the SN configuration complete message includes a list of the at least one prepared candidate cells (e.g., a list of the prepared candidate PSCells 1a and 2a).

In an embodiment, a node (candidate SN1 812) of the selected candidate cell (e.g., 1b) obtains at least (a list of) one prepared candidate cell from a serving node (e.g., MN 811); and transmits the at least one execution condition to the serving node. In an embodiment, when the candidate node (e.g., candidate SN1 812) prepares the at least one configuration for the at least one prepared candidate cell, the candidate node generates the at least one execution condition.

In an embodiment, after step S850, the node (candidate SN1 812) of the selected candidate cell knows the current serving PSCell and all the prepared candidate PSCells in candidate SNs of the DC communication system.

Then, the candidate SN1 812 may generate the at least one execution condition for each of the at least one prepared candidate cell, e.g., the candidate SN1 812 generates execution conditions for prepared candidate PSCells 1a and 2a based on cell 1b being the serving PSCell. In an embodiment, the at least one execution condition is generated by considering a signal condition of the selected candidate cell.

In an embodiment, the at least one execution condition for a first prepared candidate cell among the at least one prepared candidate cell includes at least one of following event:
(1) a first signal condition of the first prepared candidate cell is better than a signal condition of the selected candidate cell (the new serving PSCell); and
(2) a second signal condition of the first prepared candidate cell is better than a first threshold and a further signal condition of the selected candidate cell is worse than a second threshold, wherein the first threshold is larger than the second threshold,

In an embodiment, the at least one execution condition for a first prepared candidate cell among the at least one prepared candidate cell includes: a first signal condition of the first prepared candidate cell is not worse than a signal condition of the selected candidate cell (the new serving PSCell) a first offset. For example, when the first signal condition ≥ (X-Y), execution condition for the first prepared candidate cell is met, where X is the signal condition of the selected candidate cell, Y is the first offset. The first offset may be equal to or larger than 0.

Wherein, the signal condition and the further signal condition of the selected candidate cell, the first signal condition and the second signal condition of the first prepared candidate cell are belonging to RSRP (Reference Signal Received Power), RSRQ (Reference Signal Received Quality), RSSI (Received Signal Strength Indication), or SINR (Signal to Interference plus Noise Ratio).

For example, the candidate SN1 812 generates the at least one execution condition for cell 1a based on PSCell 1b being the new serving PSCell (also referred to as selected candidate cell). In an embodiment, the execution condition may be: the link quality of the candidate cell 1a becomes better than the link quality of the new serving PSCell 1b, and the difference therebetween is more than a preset offset. The preset offset may be 0 or a value larger than 0.

After the execution conditions are generated, in step S860, the candidate SN1 812 transmits the generated execution conditions for the prepared candidate PSCells 1a and 2a to the MN 811.

Next, after receiving the at least one execution condition, in step S870, the MN 811 transmits the execution conditions for the prepared candidate PSCells 1a and 2a to the UE 820, such that the UE 820 may monitor these execution conditions to determine whether the subsequent CPC execution should be triggered.

Next, in step S880, the UE 820 maintains the received execution conditions of the prepared PSCells 1a and 2a. This allows the UE 820 to monitor the execution conditions for the prepared candidate PSCells 1a and 2a and to perform a subsequent CPC to the best candidate when its execution condition is met, without needing further instructions from the MN and reperforming the negotiation for target PSCell preparation (e.g., S811-S814).

In an embodiment, the UE maintains an execution condition list including at least: ID of the prepared candidate PSCells (e.g., 1a and 2a) and corresponding pre-defined execution conditions (e.g., conditional configurations) for the prepared candidate PSCells.

Next, in step S890, the UE 820 perform the Subsequent CPC execution (also referred to as subsequent conditional execution) towards a particular prepared candidate PSCell having a met execution condition. For example, the UE 820 continuously monitors the execution conditions for each prepared candidate PSCell. Once a further execution condition for a particular prepared candidate PSCell is met, the UE 820 triggers a subsequent CPC execution to that particular prepared candidate PSCell using the configuration parameters (stored in step S880) related to that particular candidate PSCell. The particular prepared candidate PSCell becomes as new serving PSCell after the subsequent CPC is completed successfully. That is, current serving cell is changed to a selected candidate cell corresponding to the met one of the at least one execution condition after the subsequent CPC.

In an embodiment, the subsequent conditional execution is a subsequent Conditional PSCell Change (CPC), a subsequent conditional handover, or a subsequent conditional Layer 1/Layer 2 Triggered Mobility (LTM). The PSCell is a Primary Secondary Cell Group (SCG) Cell or a Primary Secondary Cell. The subsequent CPC is a CPC executed after a PSCell addition, a PSCell change, or a PCell change based on pre-configured configuration of candidate PSCell(s). A handover refers to the process of changing a serving cell. A conditional handover refers to a handover based on certain execution conditions. The subsequent conditional handover is a conditional handover executed after a serving cell change based on pre-configured configuration of candidate cell(s). An LTM refers to the process of changing a serving cell triggered by Layer 1 and Layer 2. A conditional LTM is an LTM based on certain execution conditions. The subsequent conditional LTM is a conditional LTM executed after a serving cell change based on pre-configured configuration of candidate cell(s).

### [Embodiment A.2]

In the embodiment, the at least one prepared candidate cell is directly transmitted by the UE to the node (e.g., the candidate SN1 812) of the selected candidate cell (e.g., the new serving PSCell), and after receiving the at least one prepared candidate cell from the UE, the node of the selected candidate cell generates and transmits at least one execution condition to the UE directly.

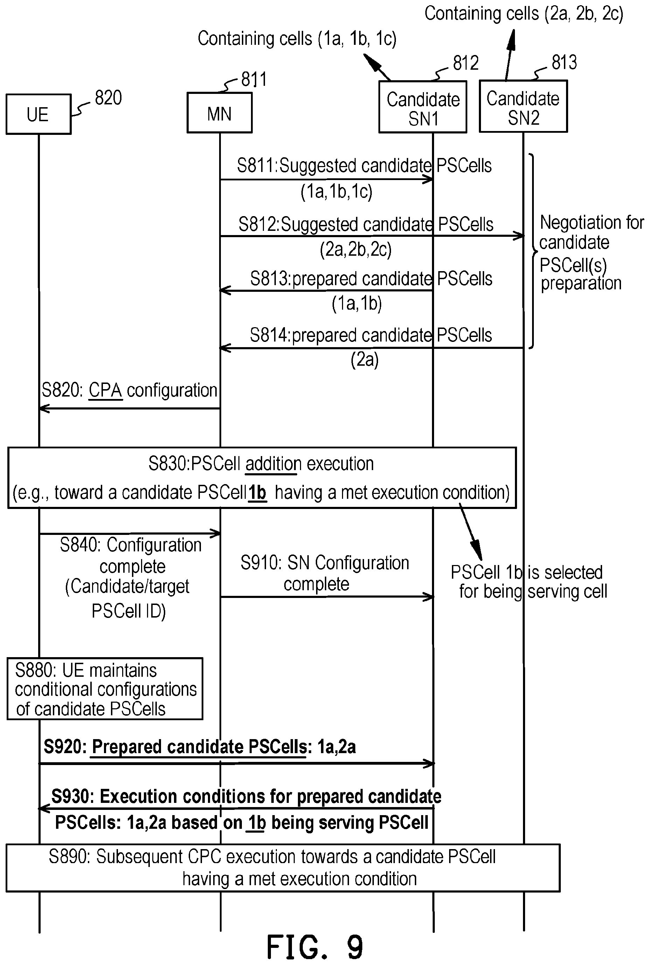

FIG. 9 is a further sequence diagram that illustrates a candidate SN generates execution conditions for subsequent CPC, according to an exemplary embodiment of the present disclosure.

Referring to FIG. 9, the initial CPA procedure and subsequent CPC execution involve at least following entities: a MN 811(also referred to as a serving node, or a serving MN), a candidate SN1 812, a candidate SN2 813 and a UE 820, wherein the candidate SN1 812 contains candidate PSCells 1a, 1b and 1c; the candidate SN2 813 contains candidate PSCells 2a, 2b and 2c. Same or similar details related to steps S811-S814, S820-S840, S880-S890 are described in FIG.8 above, and will be omitted hereto.

In step S910, after receiving the configuration complete message from the UE 820, the MN 811 transmits a message (e.g., SN configuration complete) to the SN of the target PSCell for indicating that the PSCell addition procedure and related SN configuration toward the target PSCell has been completed. The MN 811 confirms the completion of SN configuration, ensuring all settings are applied and operational. In this embodiment, the SN configuration complete message does not includes the list of the at least one prepared candidate cell.

However, in step S920, the UE 820 transmits a message including at least one prepared candidate cell to the node (e.g., candidate SN1 812) of the selected candidate cell (e.g., 1b). The node of the selected candidate cell obtains at least one (a list of) prepared candidate cell from the UE820.

Next, after step S920, the node (candidate SN1 812) of the selected candidate cell knows the current serving PSCell and all the prepared candidate PSCells in candidate SNs of the DC communication system. Then, the candidate SN1 812 may generate the at least one execution condition for each of the at least one prepared candidate cell, e.g., the candidate SN1 812 generates execution conditions for prepared candidate PSCells 1a and 2a based on cell 1b being the serving PSCell.

After the execution conditions are generated, in step S930, the candidate SN1 812 transmits the generated execution conditions for the prepared candidate PSCells 1a and 2a to the UE 820.

In an embodiment, after a cell change or a cell addition is performed, receiving, by a node of the selected candidate cell, the at least one prepared candidate cell from the UE; and after receiving, by the node of the selected candidate cell, the at least one prepared candidate cell, transmitting, by the node of the selected candidate cell, the at least one execution condition to the UE.

In an embodiment, the UE receives the at least one execution condition used in a subsequent conditional execution from a candidate node or a serving node, wherein the subsequent conditional execution is performed after a cell change or a cell addition. Then, the UE determines whether one of the at least one execution condition is met; and in response to determining that the one of the at least one execution condition is met, the UE performs the subsequent conditional execution.

### [Embodiment A.3]

In the embodiment, before configuring a configuration for an initial conditional execution (e.g., initial CPA or CPC execution), the serving node(e.g., MN811) provides the at least one prepared candidate cell to all candidate nodes (e.g., candidates SN1 and SN2); all candidate nodes generates the at least one execution condition which will be used in a subsequent conditional execution (e.g., subsequent CPC execution) for the at least one prepared candidate cell at the initial candidate cell configuration preparation stage and transmit them to the serving node before the initial conditional execution is configured.

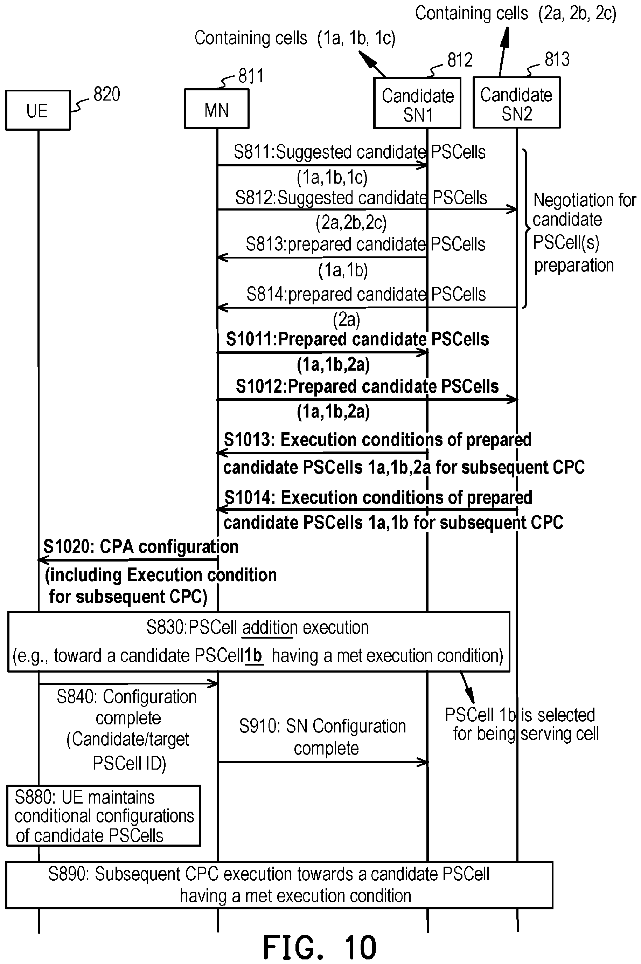

FIG. 10 is a sequence diagram that illustrates candidate SNs respectively generate execution conditions for subsequent CPC, according to an exemplary embodiment of the present disclosure.

Referring to FIG. 10, the initial CPA procedure and subsequent CPC execution involve at least following entities: a MN 811(also referred to as a serving node, or a serving MN), a candidate SN1 812, a candidate SN2 813 and a UE 820, wherein the candidate SN1 812 contains cells 1a, 1b and 1c; the candidate SN2 813 contains cells 2a, 2b and 2c. Details related to steps S811-S814, S830-S840, S910, S880-S890 are described in FIG.8 and FIG. 9 above, and will be omitted hereto.

After steps S813 and S814, i.e. receiving the prepared candidate PSCells from the candidate SN1 812 and the candidate SN2 813, the MN 811 knows all the prepared candidate PSCells (e.g., 1a, 1b, 2a).

Accordingly, in steps S1011 and S1012 the MN 811 transmits a message to the candidate SN1 812 and the candidate SN2 813, wherein the message may include a list of all the prepared candidate PSCells 1a, 1b and 2a (also referred to the prepared candidate cells).

Next, in steps S1013, the candidate SN1 812 generates at least one execution condition which will be used in a subsequent conditional execution (e.g., subsequent CPC execution) for at least one prepared candidate cell based on a scenario that its owned prepared candidate cell is selected for being the serving PSCell.

For example, the candidate SN1 812 generates: execution conditions used in a subsequent conditional execution for candidate cell 1b based on the scenario that candidate cell 1a (owned by candidate SN1 812) is selected for being the serving PSCell; execution conditions used in a subsequent conditional execution for candidate cell 2a based on the scenario that candidate cell 1a(owned by candidate SN1 812) is selected for being the serving PSCell; execution conditions used in a subsequent conditional execution for candidate cell 1a based on the scenario that candidate cell 1b (owned by candidate SN1 812) is selected for being the serving PSCell; execution conditions used in a subsequent conditional execution for candidate cell 2a based on the scenario that candidate cell 1b (owned by candidate SN1 812) is selected for being the serving PSCell.

In step S1014, the candidate SN2 813 generates the at least one execution condition which will be used in a subsequent conditional execution (e.g., subsequent CPC execution) for the at least one prepared candidate cell based on a scenario that its owned prepared candidate cell is selected for being the serving PSCell.

For example, the candidate SN2 813 generates: execution conditions used in a subsequent conditional execution for candidate cell 1a based on the scenario that candidate cell 2a (owned by candidate SN2 813) is selected for being the serving PSCell; execution conditions used in a subsequent conditional execution for candidate cell 1b based on the scenario that candidate cell 2a (owned by candidate SN2 813) is selected for being the serving PSCell.

After receiving all the execution conditions used in a subsequent conditional execution from all the candidate nodes, next, in step S1020, the MN 811 transmits an initial conditional execution configuration (e.g., initial CPA configuration) which includes the information related to the prepared candidate PSCells (e.g., 1a, 1b and 2a) to the UE 820. In the embodiment, the information related to the prepared candidate PSCells (e.g., 1a, 1b and 2a) includes the execution conditions used in a subsequent conditional execution (e.g. subsequent CPC execution) for the prepared candidate PSCells (e.g., 1a, 1b and 2a) received in steps S1013 and S1014.

In an embodiment, the execution conditions used in a subsequent conditional execution for all prepared candidate cells are received, by the MN 811 from all candidate nodes, when an initial conditional execution (e.g., a CPA execution) configuration is configured to the UE 820, and the execution conditions used in a subsequent conditional execution for all prepared candidate cells are transmitted, by the MN 811, to the UE 820 when configuring the initial conditional execution (e.g., a CPA execution) configuration.

### [Embodiment B.1]

In the embodiment, serving node (e.g., MN 811) generates at least one execution condition for prepared candidate cell for performing the subsequent conditional execution (e.g., subsequent CPC execution). In detail, after receiving the at least one prepared candidate cell from all candidate nodes, the serving node generates the at least one execution condition which will be used in a subsequent conditional execution (e.g., subsequent CPC execution) for the at least one prepared candidate cell before the initial conditional execution is configured.

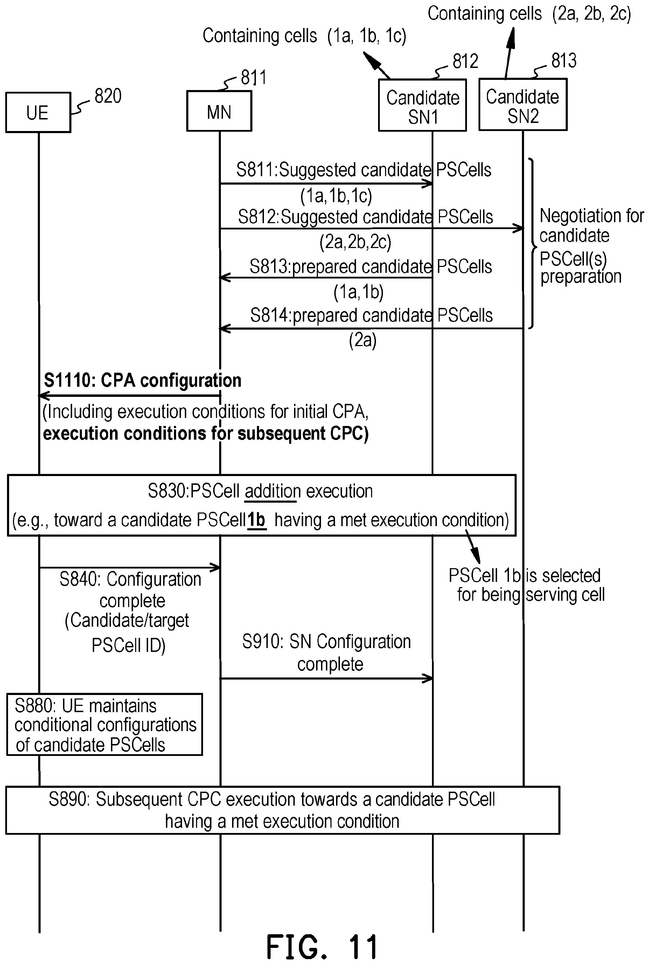

FIG. 11 is a sequence diagram that illustrates a MN generates execution conditions for subsequent CPC, according to an exemplary embodiment of the present disclosure.

Referring to FIG. 11, the initial CPA procedure and subsequent CPC execution involve at least following entities: a MN 811 (also referred to as a serving node, or a serving MN), a candidate SN1 812, a candidate SN2 813 and a UE 820, wherein the candidate SN1 812 contains cells 1a, 1b and 1c; the candidate SN2 813 contains cells 2a, 2b and 2c. Same or similar details related to steps S811-S814, S830-S840, S910, S880-S890 are described in FIG.8 and FIG. 9 above, and will be omitted hereto.

In an embodiment, after receiving all prepared candidate cells 1a, 1b and 2a from candidate SN1 812 and candidate SN2 813, the MN 811 generates the at least one execution condition which will be used in a subsequent conditional execution (e.g., subsequent CPC execution) for the at least one prepared candidate cells before the initial conditional execution (e.g., initial CPA execution) is configured. In an embodiment, after receiving all prepared candidate cells 1a, 1b and 2a from candidate SN1 812 and candidate SN2 813, the MN 811 does not transmit information related to all prepared candidate cells 1a, 1b and 2a to the candidate nodes.

After the at least one execution condition used in a subsequent conditional execution (e.g., subsequent CPC execution) for the at least one prepared candidate cells are generated, in step S1110, the MN 811 transmits a configuration message to the UE 820. For example, the configuration message is an initial CPA configuration. In an embodiment, the configuration message includes the at least one execution conditions used in the subsequent conditional execution (e.g., subsequent CPC execution) for the at least one prepared candidate PSCells (e.g., 1a, 1b and 2a) received in steps S813 and S814.

### [Embodiment B.2]

In the embodiment, after the target PSCell (e.g., candidate cell 1b) is selected/determined (or after receiving a message of configuration complete (e.g., S840)), the serving node (e.g., MN 811) generates at least one execution condition which will be used in a subsequent conditional execution (e.g., subsequent CPC execution) for the at least one prepared candidate PSCells (e.g., 1a and 2a).

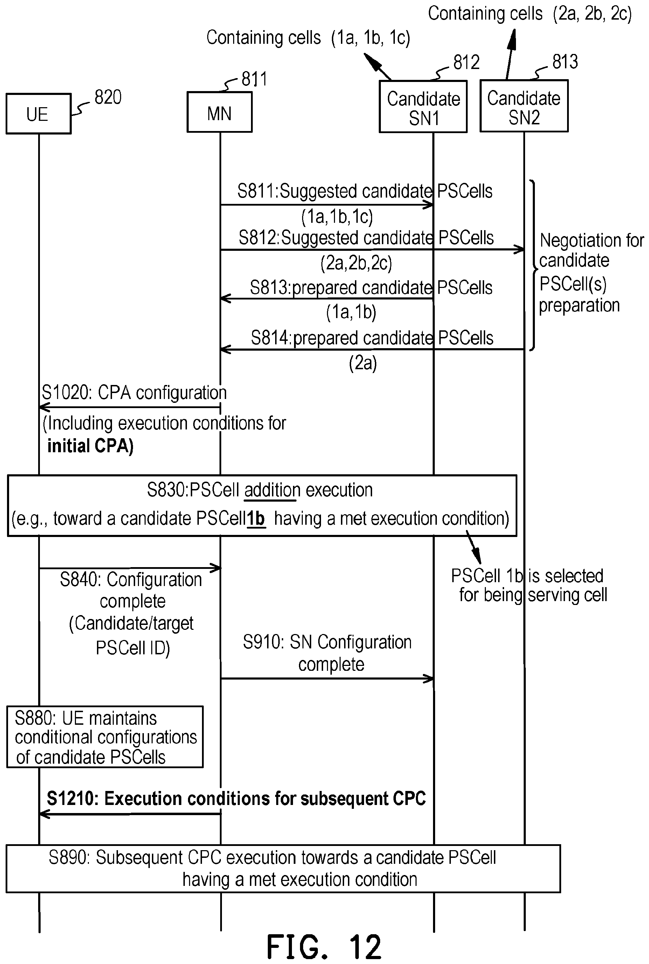

FIG. 12 is a further sequence diagram that illustrates a MN generates execution conditions for subsequent CPC, according to an exemplary embodiment of the present disclosure.

Referring to FIG. 12, the initial CPA procedure and subsequent CPC execution involve at least following entities: a MN 811 (also referred to as a serving node, or a serving MN), a candidate SN1 812, a candidate SN2 813 and a UE 820, wherein the candidate SN1 812 contains cells 1a, 1b and 1c; the candidate SN2 813 contains cells 2a, 2b and 2c. Same or similar details related to steps S811-S814, S1020, S830-S840, S910, S880-S890 are described in FIG.8, FIG. 9 and FIG. 10 above, and will be omitted hereto.

After receiving configuration complete message from the UE 820, the MN 811 recognizes the selected candidate cell 1b and generates the execution conditions which will be used in a subsequent conditional execution (e.g., subsequent CPC execution) for prepared candidate cells 1a and 2a. Then, in step S1210, the MN 811 transmits the execution conditions used in a subsequent conditional execution (e.g., subsequent CPC execution) for the prepared candidate cells 1a and 2a to the UE 820.

In an embodiment, after receiving, by a serving node, a configuration complete message from the UE, transmitting, by the serving node, the at least one execution condition used in a subsequent conditional execution to the UE.

Building on the previous discussion, the execution condition generation methods for candidate nodes, serving nodes, and UEs introduced in embodiments of the disclosure may offer several benefits:
Efficient Subsequent Conditional Execution: These methods may generate execution conditions used in a subsequent conditional execution for previously prepared candidate cell(s). This allows the UE to directly perform a subsequent conditional execution when the execution condition(s) used in the subsequent conditional execution for a previously configured candidate cell is met, without re-negotiation for candidate cell(s) preparation.

Reduced Communication Overhead: By eliminating the need for repeated negotiation for candidate cell(s) preparation, these methods save time and reduce signaling overhead. This leads to improved efficiency in a communication system, e.g., a Dual Connectivity (DC) communication system, and a conditional configuration and execution procedure, e.g., a subsequent Conditional PSCell Change (CPC) configuration and execution procedure.

Enhanced System Performance: The benefits of reduced communication overhead and efficient subsequent Conditional execution ultimately lead to an improvement for the entire communication system, including the candidate nodes, serving node, and the UE itself.

Based on above, the execution condition generation methods, adapted for candidate node, serving node and UE provided by the embodiments of the disclosure may be capable of generating execution conditions used in a subsequent conditional execution for previously prepared candidate cells, and maintaining conditional configurations of the previously prepared candidate cells, so as to directly perform the subsequent conditional execution when the execution condition(s) used in the subsequent conditional execution for a previously configured candidate cell is met, without re-negotiation for candidate cell(s) preparation. Such that, processing time is saved and signaling overhead is reduced. This improves a communication system, e.g., a DC communication system, and communication devices corresponding to candidate node(s), serving node(s) and UE in a conditional configuration and execution procedure, e.g., a subsequent CPC configuration and execution procedure.

It will be apparent to those skilled in the art that various modifications and variations can be made to the disclosed embodiments without departing from the scope or spirit of the disclosure. In view of the foregoing, it is intended that the disclosure covers modifications and variations provided that they fall within the scope of the following claims and their equivalents.

## Claims

1. An execution condition generation method, adapted for a candidate node(612, 613, 812, 813), the method comprising:
generating, by the candidate node(612, 613, 812, 813), at least one execution condition used in a subsequent conditional execution, wherein the subsequent conditional execution is performed after a cell change or a cell addition, wherein the subsequent conditional execution is performed when at least one of the at least one execution condition is met.

2. The execution condition generation method according to claim 1, wherein the subsequent conditional execution is a subsequent Conditional PSCell Change (CPC), a subsequent conditional handover, or a subsequent conditional Layer 1/Layer 2 Triggered Mobility (LTM), wherein the at least one execution condition is generated by the candidate node(612, 613, 812, 813) when the candidate node(612, 613, 812, 813) prepares at least one configuration for at least one prepared candidate cell.

3. The execution condition generation method according to claim 1, wherein the at least one execution condition is generated for each of at least one prepared candidate cell.

4. The execution condition generation method according to claim 1 further comprising:
obtaining, by the candidate node(612, 613, 812, 813), at least one prepared candidate cell from a serving node(611, 811); and
transmitting, by the candidate node(612, 613, 812, 813), the at least one execution condition to the serving node(611, 811).

5. The execution condition generation method according to claim 2, further comprising:
when at least one suggested candidate cell is not accepted to be one of the at least one prepared candidate cell, receiving, by the candidate node(612, 613, 812, 813), the at least one prepared candidate cell from a serving node(611, 811); and
after receiving, by the serving node(611, 811), the at least one execution condition from the candidate node(612, 613, 812, 813), transmitting, by the serving node(611, 811), the at least one execution condition to the UE(620, 820).

6. The execution condition generation method according to claim 1, wherein the at least one execution condition is generated after a selected candidate cell is determined.

7. The execution condition generation method according to claim 6, wherein the at least one execution condition for a first prepared candidate cell among the at least one prepared candidate cell comprises at least one of following event:
a first signal condition of the first prepared candidate cell is better than a signal condition of the selected candidate cell; and
a second signal condition of the first prepared candidate cell is better than a first threshold and a further signal condition of the selected candidate cell is worse than a second threshold, wherein the first threshold is larger than the second threshold,
wherein the signal condition and the further signal condition of the selected candidate cell, the first signal condition and the second signal condition of the first prepared candidate cell are belonging to RSRP (Reference Signal Received Power), RSRQ (Reference Signal Received Quality), RSSI (Received Signal Strength Indication), or SINR (Signal to Interference plus Noise Ratio).

8. The execution condition generation method according to claim 6, further comprising:
obtaining, by a node of the selected candidate cell(812), at least one prepared candidate cell from the UE(620, 820); and
transmitting, by the node of the selected candidate cell(812), the at least one execution condition to the UE(620, 820).

9. The execution condition generation method according to claim 6, further comprising:
after receiving, by a serving node(611, 811), a configuration complete message from the UE(620, 820), transmitting, by the serving node(611, 811), at least one prepared candidate cell to a node of the selected candidate cell; and
after receiving, by the serving node(611, 811), the at least one execution condition, transmitting, by the serving node(611, 811), the at least one execution condition to the UE(620, 820).

10. The execution condition generation method according to claim 6, further comprising:
obtaining, by a node of the selected candidate cell, at least one prepared candidate cell from a serving node(611, 811); and
transmitting, by the node of the selected candidate cell, the at least one execution condition to the serving node(611, 811).

11. An execution condition generation method, adapted for a serving node(611, 811), the method comprising:
generating, by the serving node(611, 811), at least one execution condition used in a subsequent conditional execution, wherein the subsequent conditional execution is performed after a cell change or a cell addition, wherein the subsequent conditional execution is performed when at least one of the at least one execution condition is met.

12. The execution condition generation method according to claim 11,
wherein the at least one execution condition is generated for each of at least one prepared candidate cell,
wherein the at least one execution condition is generated before a configuration for an initial conditional execution is configured; or the at least one execution condition is generated after a selected candidate cell is determined.

13. The execution condition generation method according to claim 12, further comprising:
when configuring, by the serving node(611, 811), the configuration for an initial conditional execution,
or
after receiving, by the serving node(611, 811), a configuration complete message from the User Equipment (UE) (620, 820), transmitting, by the serving node(611, 811), the at least one execution condition to the UE(620, 820).

14. The execution condition generation method according to claim 13, wherein the at least one execution condition is generated after the selected candidate cell is determined, the execution condition generation method further comprising:
the at least one execution condition is generated by considering a signal condition of the selected candidate cell, wherein the at least one execution condition for a first prepared candidate cell among the at least one prepared candidate cell comprises at least one of following event:
a first signal condition of the first prepared candidate cell is better than a signal condition of the selected candidate cell; and
a second signal condition of the first prepared candidate cell is better than a first threshold and a further signal condition of the selected candidate cell is worse than a second threshold, wherein the first threshold is larger than the second threshold,
wherein the signal condition and the further signal condition of the selected candidate cell, the first signal condition and the second signal condition of the first prepared candidate cell are belonging to RSRP (Reference Signal Received Power), RSRQ (Reference Signal Received Quality) RSSI (Received Signal Strength Indication), or SINR (Signal to Interference plus Noise Ratio).

15. An execution condition generation method, adapted for a user equipment (UE) (620, 820), the method comprising:
receiving, by the UE(620, 820), at least one execution condition used in a subsequent conditional execution from a candidate node(612, 613, 812, 813) or a serving node(611, 811), wherein the subsequent conditional execution is performed after a cell change or a cell addition;
determining whether one of the at least one execution condition is met; and
in response to determining that the one of the at least one execution condition is met, performing the subsequent conditional execution.

16. The execution condition generation method according to claim 15, wherein performing the subsequent conditional execution comprising:
changing a serving cell to a selected candidate cell corresponding to the one of the at least one execution condition.

17. The execution condition generation method according to claim 15, wherein the at least one execution condition is generated before a configuration for an initial conditional execution is configured or after a selected candidate cell is determined.

18. The execution condition generation method according to claim 17, wherein before a configuration for an initial conditional execution is configured, at least one configuration for at least one prepared candidate cell is prepared by the candidate node(612, 613, 812, 813).

19. The execution condition generation method according to claim 17, further comprising:
transmitting, by the UE(620, 820), at least one prepared candidate cell to a node of the selected candidate cell; and
receiving, by the UE(620, 820), the at least one execution condition from the node of the selected candidate cell.
